# EUROPÄISCHE PATENTANMELDUNG

(11) **EP 0 732 645 A1**
(43) Veröffentlichungstag der Anmeldung: **18.09.1996**
(21) Anmeldenummer: 96103968.2
(22) Anmeldetag: 13.03.1996
(51) Int. Cl.: G05G 5/06, F16H 59/70, H01H 13/20

(54) **Arretierschraube**

(30) Priorität: 17.03.1995 DE 19509880
(71) Anmelder: Schwarzbich, Jörg, D-33615 Bielefeld (DE)
(72) Erfinder: Schwarzbich, Jörg, D-33615 Bielefeld (DE)
(74) Vertreter: TER MEER - MÜLLER - STEINMEISTER & PARTNER

(57) **Zusammenfassung**

Arretierschraube für Kraftfahrzeuggetriebe, in der Form einer Hohlschraube (12), die einen Kopf (14) und einen in den Getriebeblock einschraubbaren Gewindeteil (16) aufweist und in der ein Rastglied (18) axialbeweglich geführt und gegen ein Schaltgebirge der Schaltwelle des Getriebes vorgespannt ist, dadurch gekennzeichnet, daß der Kopf (12) einen Kunststoffkörper (46) aufweist, der an einem den Gewindeteil (16) und die Führung (40) für das Rastglied (18) bildenden hohlzylindrischen Metallkern (40) angespritzt ist.

## Beschreibung

Die Erfindung betrifft eine Arretierschraube für Kraftfahrzeuggetriebe, in der Form einer Hohlschraube, die einen Kopf und einen in den Getriebeblock einschraubbaren Gewindeteil aufweist und in der ein Rastglied axialbeweglich geführt und gegen ein Schaltgebirge der Schaltwelle des Getriebes vorgespannt ist. Außerdem betrifft die Erfindung Verfahren zur Herstellung spezieller Ausführungsformen einer solchen Arretierschraube.

Arretierschrauben der oben genannten Art dienen dazu, die Schaltwelle in der vom Fahrer gewählten Getriebeposition zu fixieren.

Bei einer bekannten Arretierschraube, wie sie in DE 36 39 120 C2 beschrieben wird, weist das Rastglied eine Kugel auf, die mit Hilfe kleinerer Lagerkugeln in einer Lagerschale am Ende einer axialbeweglichen Hülse gelagert ist. Die Hülse ist durch ein Wälzlager im Inneren der Hohlschraube gehalten, so daß sie sich reibungsarm in Axialrichtung der Hohlschraube bewegen kann. Bei dem Hauptkörper dieser Arretierschraube handelt es sich um präzise bearbeitetes Drehteil. Damit ein Sechskantkopf gebildet werden kann, der das Einschrauben in den Getriebeblock gestattet, muß das Drehteil in relativ aufwendiger Weise aus einem sechskantförmigen Rohling hergestellt werden.

Aus DE 38 08 375 C1 ist es bekannt, in die eigentliche Hohlschraube ein topfförmiges Blechteil einzupressen, das eine gehärtete Lauffläche für die Wälzkörper des Wälzlagers und zugleich ein Widerlager für die Feder bildet, die die Hülse in Richtung auf die Schaltwelle vorspannt. In diesem Fall entsteht ein zusätzlicher Arbeitsaufwand für die Herstellung und das Einpressen des topfförmigen Blechteils.

Im Sinne einer vereinfachten Herstellung wäre es wünschenswert, wenn die Hohlschraube in einem Spritzgießverfahren aus Kunststoff hergestellt werden könnte. In diesem Fall kommt es jedoch aufgrund des Kaltfließverhaltens des Kunststoffs im Bereich des Gewindeteils auf längere Sicht zu einer Lockerung der Schraubverbindung zwischen der Hohlschraube und dem Getriebeblock.

Aufgabe der Erfindung ist es deshalb, eine Arretierschraube der eingangs genannten Art zu schaffen, die sich dauerhaft im Getriebeblock befestigen läßt und dennoch auf einfache Weise hergestellt werden kann.

Diese Aufgabe wird erfindungsgemäß dadurch gelöst daß der Kopf der Hohlschraube einen Kunststoffkörper aufweist, der an einen den Gewindeteil und die Führung für das Rastglied bildenden hohlzylindrischen Metallkern angespritzt ist.

Bei dieser Lösung kann der hohlzylindrische Metallkern aus einem zylindrischen Rohling gedreht werden, wodurch sich der Bearbeitungsaufwand erheblich verringert. Die beispielsweise sechskantförmige Handhabe zum Einschrauben der Arretierschraube in den Getriebeblock wird auf einfache Weise durch anschließendes Umspritzen des Metallkerns mit Kunststoff hergestellt. Der Gewindeteil besteht somit nach wie vor aus Metall, so daß dauerhaft ein fester Sitz der Arretierschraube im Getriebeblock gewährleistet werden kann. Auch die Führung für das Rastglied, also beispielsweise die Laufflächen für das Wälzlager, in dem die mit der Rastkugel versehene Hülse gelagert ist, sind an dem Metallkern ausgebildet und zeichnen sich somit durch eine hohe Verschleißfestigkeit aus, die durch Härten der Metalloberfläche noch gesteigert werden kann. Somit ist es bei der erfindungsgemäßen Lösung nicht mehr erforderlich, ein zusätzliches Blechteil in die Hohlschraube einzupressen, zumal im Bedarfsfall auch das Widerlager für die Feder durch den angespritzten Kunststoffkörper gebildet werden kann.

Vorteilhafte Weiterbildungen und Ausgestaltungen der Erfindung ergeben sich aus den abhängigen Patentansprüchen.

Bevorzugt sind die Oberflächenbereiche des Metallkerns, die mit Kunststoff umspritzt werden, mit einem Relief, beispielsweise einer Rändelung oder einem Muster von Nuten und Rippen versehen, durch die der Eingriff zwischen Metall und Kunststoff verbessert wird. An die dem Gewindeteil der Arretierschraube zugewandte Seite des Kunststoffkörpers kann unmittelbar eine Dichtlippe angespritzt sein, die sich beim Anziehen der Arretierschraube fest an das Metall des Getriebeblockes anlegt und so eine zuverlässige Abdichtung der Gewindebohrung des Getriebeblockes gewährleistet.

Der Kunststoffkörper kann auch eine Anzahl von Haltefingern bilden, die auf dem inneren Umfang des hohlzylindrischen Metallkerns verteilt sind und sich in den Bereichen zwischen den Laufflächen der Wälzkörper axial durch das Innere des Metallkerns erstrecken und am freien Ende federnde Halteklauen bilden, die die in dem Wälzlager gelagerte Hülse gegen Herausfallen aus der Hohlschraube sichern.

Aus DE 43 07 596 A1 ist es bekannt, die Arretierschraube mit einem elektrischen Schalter zu kombinieren, der durch das axial bewegliche Rastglied betätigt wird und es somit beispielsweise gestattet, das Einlegen des Rückwärtsganges zu erfassen, um das Rückfahrlicht des Fahrzeugs einzuschalten. Bei einer solchen Kombination aus Arretierschraube und Schalter kann der erfindungsgemäß an dem Metallkern angespritzte Kunststoffkörper auch zugleich das Schaltergehäuse bilden oder dazu dienen, dieses Schaltergehäuse mechanisch mit der eigentlichen Arretierschraube zu verbinden.

Dies kann beispielsweise dadurch geschehen daß das Schaltergehäuse und der Metallkern in der gewünschten Position relativ zueinander gehalten und dann gemeinsam mit dem Kunststoffkörper umspritzt werden. Alternativ ist es auch möglich, daß die Arretierschraube eine Ausnehmung bildet, die das Ende des Schaltergehäuses unter Bildung eines ringförmigen Zwischenraumes umgibt, oder daß umgekehrt das Schaltergehäuse eine Ausnehmung bildet, die das zugehörige Ende der Arretierschraube unter Bildung eines solchen Zwischenraumes umgibt, und daß dieser Zwischenraum dann mit Kunststoff ausgespritzt wird. Der Kunststoffkörper im Sinne des Anspruchs 1 wird in diesem Fall durch den in den Zwischenraum eingespritzten Kunststoff gebildet. Selbstverständlich kann auch in diesem Fall die Arretierschraube einen Metallkern und einen angespritzten Kunststoffkörper aufweisen, der den Außensechskant und gegebenenfalls die Ausnehmung für das Schaltergehäuse bildet.

Bei mit einem Schalter kombinierten Arretierschrauben ist üblicherweise zwischen dem Schaltergehäuse und dem ihr zugewandten Ende der Hohlschraube eine flexible Membran eingefügt. Die Erfindung bietet die Möglichkeit, diese Membran auf einfache Weise sicher zu befestigen und am Rand abzudichten, indem sie mit ihrem Umfangsrand in den angespritzten Kunststoffkörper eingebettet wird.

Im folgenden werden bevorzugte Ausführungsbeispiele der Erfindung anhand der Zeichnungen näher erläutert. Es zeigen:
- Fig. 1: einen axialen Schnitt durch eine Arretierschraube; und
- Fig. 2: einen Schnitt durch eine Arretierschraube gemäß einem anderen Ausführungsbeispiel, die mit einem Rückfahrlichtschalter kombiniert ist.

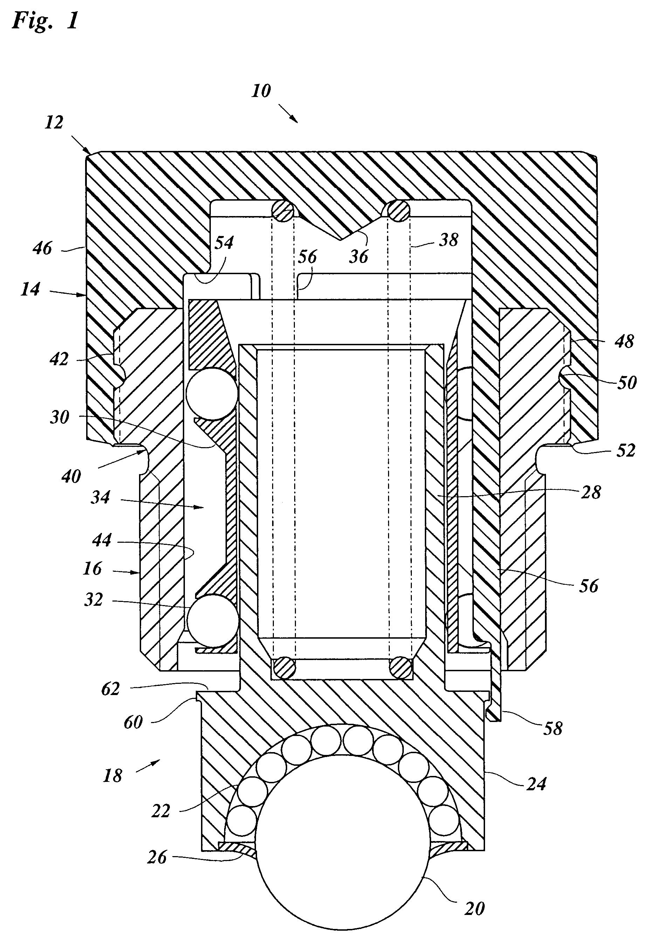

Die in Figur 1 gezeigte Arretierschraube 10 besitzt ein Gehäuse in der Form einer Hohlschraube 12 mit einem beispielsweise sechskantförmigen Kopf 14 und einem Gewindeteil 16, der mit einem Außengewinde versehen und in eine Gewindebohrung eines nicht gezeigten Getriebegehäuses einschraubbar ist. In der Hohlschraube ist ein Rastglied 18 mit einer Rastkugel 20 angeordnet, die ein Schaltgebirge einer nicht gezeigten Schaltwelle des Getriebes abfährt. Die Rastkugel 20 ist mit Hilfe von Stützkugeln 22 reibungsarm in einer Lagerschale 24 gelagert und durch einen Haltering 26 gesichert.

Das Rastglied 18 bildet eine einstückig mit der Lagerschale 24 verbundene zylindrische Hülse 28, die in einem durch einen Kugelkäfig 30 und Kugeln 32 gebildeten Kugellager 34 gelagert und innerhalb eines begrenzten Bereichs axial im Inneren der Hohlschraube 12 beweglich ist. Der Kopf 14 schließt die Hohlschraube 12 nach oben ab und bildet im Inneren ein als Zentrierkonus ausgebildetes Widerlager 36 für eine Schraubenfeder 38, die sich mit ihrem unteren Ende an der Lagerschale 24 abstützt und somit die Rastkugel 20 gegen die Schaltwelle vorspannt.

Die Hohlschraube 12 weist einen hohlzylindrischen Metallkern 40 auf, der den Gewindeteil 16 sowie innerhalb des Kopfes 14 einen zylindrischen Abschnitt 42 mit etwas größerem Durchmesser bildet. Die Innenfläche des Metallkerns 40 kann wahlweise gehärtet sein und bildet eine Lauffläche 44 für die Kugeln 32 des Kugellagers 34. Sie dient somit als Führung für das Rastglied 18.

Der zylindrische Abschnitt 42 des Metallkerns 40 ist mit einem Kunststoffkörper 46 umspritzt, der den Außensechskant des Kopfes 14 sowie das Widerlager 36 bildet. Eine feste formschlüssige Verbindung zwischen dem Kunststoffkörper 46 und dem Metallkern 40 wird dadurch erreicht, daß auf der äußeren Umfangsfläche des zylindrischen Abschnitts 42 des Metallkerns eine Rändelung 48 und eine umlaufende Nut 50 vorgesehen sind.

An der unteren Stirnfläche des Kunststoffkörpers 46 ist eine umlaufende Dichtlippe 52 ausgebildet, die sich dicht an die Außenwand des Getriebegehäuses anlegt, wenn die Arretierschraube 10 in das Getriebegehäuse eingeschraubt und fest angezogen wird.

Im Inneren der Hohlschraube 12 bildet der Kunststoffkörper 46 eine Schulter 54, die als Anschlag für den Kugelkäfig 30 dient. Von dieser Schulter 54 aus verlaufen einstückig mit dem Kunststoffkörper 46 ausgebildete Haltefinger 56 axial durch das Innere des Metallkerns 40 zu dessen unterem Ende. Die Haltefinger 56 sind so in Umfangsrichtung verteilt, daß sie sich jeweils in den Zwischenräumen zwischen den Kugeln 32 durch entsprechende Längsnuten des Kugelkäfigs 30 erstrecken. Am freien unteren Ende bildet jeder Haltefinger 56 eine Halteklaue 58, die einen Bund 60 der Lagerschale 24 umgreift und so das Rastglied 18 gegen Herausfallen aus der Hohlschraube 12 sichert. Die Bohrung des Metallkerns 40 ist am unteren Ende etwas erweitert, so daß die Halteklauen 58 elastisch nach außen ausweichen können, wenn bei der Montage das Rastglied 18 in den Halteklauen 58 eingerastet wird.

Die obere Endlage des Rastgliedes 18 wird durch eine an der Lagerschale 24 ausgebildete Schulter 62 definiert, die am unteren Ende des Kugelkäfigs 30 anschlägt, wenn sich dieser in seiner oberen Position in Anlage an der Schulter 54 befindet.

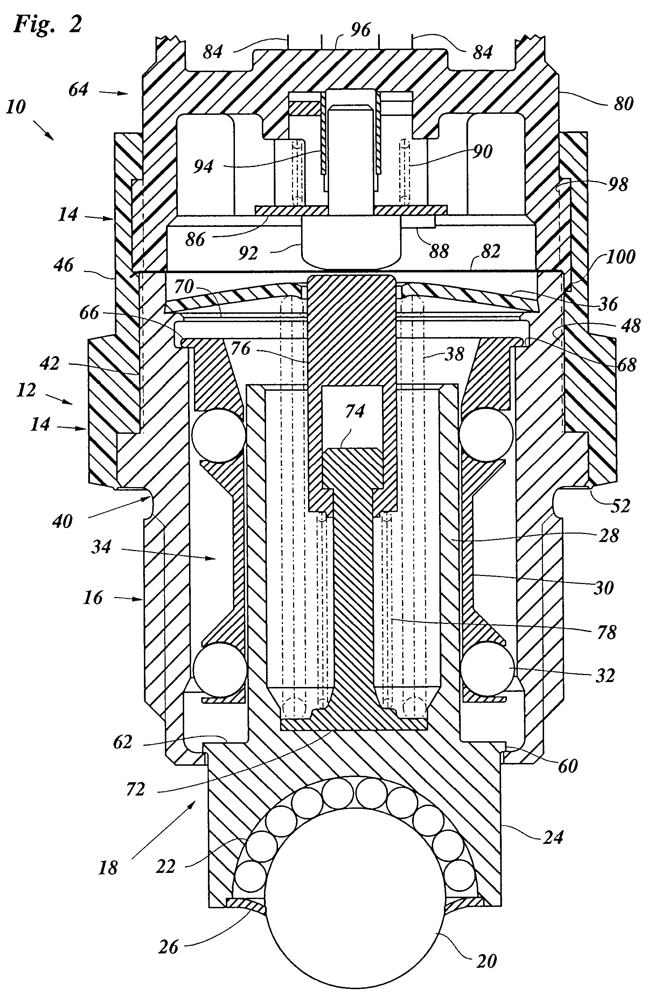

Figur 2 zeigt eine Ausführungsform, bei der in den Kopf 14 der Arretierschraube 10 ein Schalter 64, beispielsweise ein Rückfahrlichtschalter, integriert ist, der durch das Rastglied 18 betätigt wird.

Das Widerlager 36 für die Feder 38 wird hier durch ein ringförmiges Kunststoffplättchen gebildet, das klemmend im oberen Ende des hohlzylindrischen Metallkerns 40 gehalten ist. Der Kugelkäfig 30 besitzt am oberen Ende einen Bund 66, der zwischen einer Schulter 68 und einem nach innen vorspringenden Bund 70 des Metallkerns 40 beweglich ist, so daß das Axialspiel des Kugelkäfigs begrenzt wird.

Die Feder 38 stützt sich hier mit ihrem unteren Ende auf einem Haltestift 72 ab, der sich seinerseits an dem durch die Lagerschale 24 abgeschlossenen unteren Ende der Hülse 28 abstützt. Der Haltestift 72 ist am oberen Ende mit einem verdickten Kopf 74 teleskopartig in einem Druckstift 76 geführt und in seinem mittleren Bereich von einer weiteren Feder 78 umgeben, die sich auf dem tellerartigen unteren Ende des Haltestiftes abstützt und mit ihrem oberen Ende den Boden des Druckstiftes 76 gegen den Kopf 74 andrückt.

Der Haltestift 72, der Druckstift 76 und die Feder 78 bilden zusammen ein elastisch komprimierbares teleskopartiges Schaltweganpassungsglied, das zur Betätigung des Schalters 64 dient. Dieses Schaltweganpassungsglied ist Gegenstand einer gleichzeitig eingereichten Patentanmeldung mit dem Titel "Rastelement mit integriertem Schalter".

Der Schalter 64, von dem in der Zeichnung lediglich der die Schaltkontakte aufnehmende Teil gezeigt ist, besitzt ein im wesentlichen zylindrisches Gehäuse 80 aus Kunststoff, das auf das obere Ende des Metallkerns 40 aufgesetzt ist. Zwischen dem Gehäuse 80 und dem Metallkern 40 ist eine durch ein dünnes Stahlplättchen gebildete Membran 82 eingespannt, die nach außen etwas über den Umfang des Metallkerns 40 und des Gehäuses 80 übersteht, wie auf der linken Seite in Figur 2 zu erkennen ist. Durch die Membran 82 wird das Innere des Schaltergehäuses gegenüber der Hohlschraube 12 abgeschlossen, so daß die elektrischen Komponenten des Schalters gegen das Eindringen von Öl geschützt sind.

In dem Gehäuse 80 des Schalters 64 sind zwei Kontaktstifte 84 angeordnet. Diese Kontaktstifte 84 sind innerhalb des Gehäuses 80 in Abstand um eine ringförmige Kontaktbrücke 86 herumgeführt und bilden zwei Kontakte 88, die an der Unterseite der Kontaktbrücke 86 liegen. In der Zeichnung ist nur der Kontakt 88 des rechten Kontaktstiftes 84 zu erkennen, da der linke Kontaktstift teilweise im Schnitt gezeigt ist, so daß sein Kontakt auf der dem Betrachter zugewandten Seite der Zeichenebene liegt.

Die Kontaktbrücke 86 ist durch eine Feder 90 elastisch in Richtung auf die Membran 82 vorgespannt und stützt sich an einem Kopf eines Betätigungsorgans 92 ab, das in einer Hülse 94 axial verschiebbar in dem Gehäuse 80 geführt ist und der Stirnseite des Druckstiftes 76 auf der anderen Seite der Membran 82 gegenüberliegt. Der Bewegungsbereich des Betätigungsorgans 92 wird nach oben durch eine Trennwand 96 des Gehäuses 80 begrenzt, die einen Anschlag für den in der Hülse 94 geführten Schaft des Betätigungsorgans bildet.

Wenn die Getriebeposition geändert wird und die Rastkugel 20 auf einen Berg des Schaltgebirges an der Schaltwelle aufläuft, so wird das Rastglied 18 insgesamt entgegen der Kraft der Feder 38 in die Hohlschraube 12 zurückgedrückt. Die Kraft der Feder 78 überwindet dabei die Kraft der Feder 90 und die Rückstellkraft der Membran 82, so daß der Druckstift 76 die Membran verformt und das Betätigungsorgan 92 nach oben drückt. Hierdurch wird die Kontaktbrücke 86 von den Kontakten 88 abgehoben, so daß der Schalter 64 geöffnet wird. Auf diese Weise kann beispielweise angezeigt werden, daß die Schaltwelle die Rückwärts-Getriebeposition verlassen hat. Wenn die Rastkugel 20 dann weiter auf dem Berg des Schaltgebirges aufläuft, während das Betätigungsorgan 92 an dem durch die Trennwand 96 gebildeten Anschlag anliegt, wird der Haltestift 72 entgegen der Kraft der Feder 78 tiefer in den Druckstift 76 eingedrückt.

Im gezeigten Ausführungsbeispiel ist nicht nur der obere zylindrische Abschnitt 42 des Metallkerns 40, sondern auch das Gehäuse 80 des Schalters 64 mit dem Kunststoffkörper 46 umspritzt. Hierdurch werden der Schalter 64 und die Hohlschraube 12 mechanisch zu einer Einheit verbunden. Der vorspringende Rand der Membran 82 ist in den Kunststoffkörper 46 eingebettet, so daß die Membran sicher in Position gehalten wird und zugleich eine wirksame Abdichtung zwischen dem Inneren der Hohlschraube 12 und dem Inneren des Schaltergehäuses 80 gewährleistet wird. Der äußere Umfang des Schaltergehäuses 80 ist ähnlich wie der zylindrische Abschnitt 42 des Metallkerns 40 mit einer Rändelung oder mit Nuten 98 versehen.

Um während der Herstellung des Kunststoffkörpers 46 eine provisorische Fixierung des Schaltergehäuses 80 in bezug auf den Metallkern 40 zu ermöglichen, sind am Umfangsrand des Schaltergehäuses 80 vorspringende Zapfen 100 vorgesehen, die sich durch nicht gezeigte Kerben im Rand der Membran 82 erstecken und den äußeren Umfangsrand des Metallkerns 40 umgreifen.

Die in Figur 2 gezeigte Arretierschraube wird hergestellt, indem der Metallkern 40 und das Schaltergehäuse 80 zunächst provisorisch zusammengefügt und dann in einem Arbeitsgang mit dem einheitlichen Kunststoffkörper 46 umspritzt werden, der zugleich den Außensechskant der Arretierschraube bildet.

Alternativ ist auch eine zweistufige Vorgehensweise möglich, bei der zunächst der Metallkern 40 mit einem den Außensechskant bildenden Kunststoffkörper umspritzt wird, wobei zugleich in der Stirnfläche des Kopfes 14 eine kreisförmige Ausnehmung gebildet wird, in die dann das untere Ende des Schaltergehäuses 80 so eingesetzt werden kann, daß zwischen dem Schaltergehäuse und der Innenwand dieser Ausnehmung ein ringförmiger Zwischenraum gebildet wird. Dieser Zwischenraum wird dann in einem weiteren Arbeitsgang mit Kunststoff ausgespritzt.

Eine analoge Vorgehensweise ist auch dann möglich, wenn der Außensechskant der Hohlschraube 12 ganz aus Metall besteht. In diesem Fall hat der Kunststoffkörper nur die Funktion, das Schaltergehäuse 80 mechanisch mit der Hohlschraube 12 zu verbinden und die Membran 82 zu fixieren und abzudichten.

Umgekehrt ist es selbstverständlich auch möglich, das Schaltergehäuse 80 mit einer Ausnehmung zu versehen, in die ein oberer Endbereich der Hohlschraube 12 eingesetzt wird und die dann mit Kunststoff ausgespritzt wird.

## Patentansprüche

1. Arretierschraube für Kraftfahrzeuggetriebe, in der Form einer Hohlschraube (12), die einen Kopf (14) und einen in den Getriebeblock einschraubbaren Gewindeteil (16) aufweist und in der ein Rastglied (18) axialbeweglich geführt und gegen ein Schaltgebirge der Schaltwelle des Getriebes vorgespannt ist, dadurch **gekennzeichnet**, daß der Kopf (12) einen Kunststoffkörper (46) aufweist, der an einem den Gewindeteil (16) und die Führung (44) für das Rastglied (18) bildenden hohlzylindrischen Metallkern (40) angespritzt ist.

2. Arretierschraube nach Anspruch 1, dadurch **gekennzeichnet**, daß der Metallkern (40) in den Oberflächenbereichen, in denen der Kunststoffkörper (46) angespritzt ist, eine Rändelung (48) und/oder Nuten (50) aufweist.

3. Arretierschraube nach Anspruch 1 oder 2, dadurch **gekennzeichnet**, daß der Kunststoffkörper (46) einen Außensechskant der Hohlschraube (12) bildet und an seiner dem Gewindeteil (16) zugewandten Stirnfläche eine umlaufende Dichtlippe (52) bildet.

4. Arretierschraube nach einem der vorstehenden Ansprüche, dadurch **gekennzeichnet**, daß der Kunststoffkörper (46) ein Widerlager (36) für eine Feder (38) zum Vorspannen des Rastgliedes (18) bildet.

5. Arretierschraube nach einem der vorstehenden Ansprüche, dadurch **gekennzeichnet**, daß der Kunststoffkörper (46) einstückig angeformte Haltefinger (56) aufweist, die von dem Kopf (14) aus durch das Innere des hohlzylindrischen Metallkerns (40) verlaufen und am freien Ende des Gewindeteils (60) Halteklauen (58) zur Begrenzung der Auswärtsbewegung des Rastgliedes (18) bilden.

6. Arretierschraube nach einem der vorstehenden Ansprüche, dadurch **gekennzeichnet**, daß ein am Kopf (14) der Hohlschraube (12) angeordneter, durch das Rastglied (18) betätigter elektrischer Schalter (64) durch den Kunststoffkörper (46) mechanisch mit der Hohlschraube (12) verbunden ist.

7. Arretierschraube nach Anspruch 6, dadurch **gekennzeichnet**, daß eine das Gehäuse (80) des Schalters vom Inneren der Hohlschraube (12) trennende Membran (82) mit ihrem äußeren Umfangsrand in den Kunststoffkörper (46) eingebettet ist.

8. Verfahren zur Herstellung der Arretierschraube nach Anspruch 6 oder 7, dadurch **gekennzeichnet**, daß der Metallkern (40) und das Gehäuse (80) des Schalters (64) gemeinsam mit dem Kunststoffkörper (46) umspritzt werden.

9. Verfahren zur Herstellung der Arretierschraube nach Anspruch 6 oder 7, dadurch **gekennzeichnet**, daß der Kopf der Hohlschraube in seiner Stirnfläche mit einer Ausnehmung versehen wird, das Schaltergehäuse so in diese Ausnehmung eingesetzt wird, daß zwischen der Innenwand der Ausnehmung und der Außenwand des Schaltergehäuses ein ringförmiger Zwischenraum gebildet wird, und daß dieser Zwischenraum mit Kunststoff ausgespritzt wird.

10. Verfahren zur Herstellung der Arretierschraube nach Anspruch 6 oder 7, dadurch **gekennzeichnet**, daß das Schaltergehäuse mit einer Ausnehmung versehen wird, das dem Gewindeteil entgegengesetzte Ende der Hohlschraube so in diese Ausnehmung eingesetzt wird, daß zwischen der Innenwand der Ausnehmung und der Hohlschraube ein ringförmiger Zwischenraum verbleibt, und daß dieser Zwischenraum mit Kunststoff ausgespritzt wird.
